# EUROPÄISCHE PATENTSCHRIFT

(11) **EP 0 730 791 B1**
(45) Veröffentlichungstag und Bekanntmachung des Hinweises auf die Patenterteilung: **09.06.1999**
(21) Anmeldenummer: 95909626.4
(22) Anmeldetag: 10.02.1995
(51) Int. Cl.: H02H 7/085

(54) **VERFAHREN ZUR REGELUNG EINER DURCH EINEN ANTRIEBSMOTOR ANGETRIEBENEN AUTOMATISCHEN TÜR**
PROCESS FOR REGULATING AN AUTOMATIC DOOR OPERATED BY A DRIVE MOTOR
PROCEDE DE REGULATION D'UNE PORTE AUTOMATIQUE ACTIONNEE PAR UN MOTEUR D'ENTRAINEMENT

(30) Priorität: 02.05.1994 DE 4415164
(43) Veröffentlichungstag der Anmeldung: 11.09.1996
(73) Patentinhaber: DORMA GmbH + Co. KG, 58256 Ennepetal (DE)
(72) Erfinder: THEILE, Ulrich, D-58091 Hagen (DE)
(86) Internationale Anmeldenummer: DE9500169
(87) Internationale Veröffentlichungsnummer: WO9530265

(56) Entgegenhaltungen:
- EP-A- 0 590 227
- DE-A- 4 214 998

## Beschreibung

Die Erfindung betrifft ein Verfahren zur Regelung einer durch einen Antriebsmotor angetriebenen automatischen Tür, bei der der Beginn des Bewegungsablaufes durch ein Dauersignal oder mindestens ein Sensorsignal aktiviert wird. Dieses können Türen beispielsweise folgender Art sein: Schiebetür, Bogenschiebetür, Falttür, Drehflügeltüren, Karusselltüren usw., die mit einer programmierbaren elektronischen Steuerungseinheit, die einen Mikroprozessor beinhaltet, ausgestattet sind. Da durch die vorgenannte Art von automatischen Türen sich Personen bewegen, ist es wichtig, für diese ein Höchstmaß an Sicherheit zu erzielen, daß nämlich keine Gefahren durch die aufeinander zulaufenden Schließ- bzw. Gegenschließkanten entstehen. Diese Gefahren können beispielsweise darin bestehen, daß Personen eingeklemmt werden, bzw. daß durch eine überhöhte Kraft, hervorgerufen durch den Antrieb, zwischen der Schließ- und Gegenschließkante Verletzungen entstehen. Es ist deshalb notwendig, daß derartige Kanten abgesichert werden, dieses kann dadurch geschehen, daß eine kostenintensive, aufwendige Sensorik angebracht wird bzw. auch durch Verfahrensschritte, die eine Kraftlimitierung für die Antriebseinheit ausführen und überwachen. Diese Kraftlimitierung kann dadurch erreicht werden, daß z.B. die Leistung des Antriebes so schwach ausgelegt wird, daß eine bestimmte Kraft durch den Antriebsmotor nicht überschritten wird, was aber zu einem unbefriedigenden schleppenden Lauf der Türflügel führt.

Eine Begrenzung der Schließkraft an der Schließkante eines beweglichen Elementes ist aus der Europäischen Patentanmeldung 0 468 361 bekannt geworden. Durch eine redundant ausgeführte Meßschaltungsanordnung wird neben dem Motorstrom, der über einen Meßwiderstand gemessen wird, der Sollwert des maximalen Motorstromes an redundante Meßsysteme geführt und dort verarbeitet. Bei einer Überschreitung eines vorgegebenen Motorstromes wird ein Abschaltimpuls an die Steuerelektronik des Antriebes weitergeleitet. Durch die redundante Ausführung ist das System fehler- und eigensicher.

In einer weiteren europäischen Patentanmeldung 0 548 505 wird ein Verfahren und eine Vorrichtung zur Bestimmung der dynamischen Masse an Aufzugstüren beschrieben. Durch dieses Verfahren wird zu jeder Schließgeschwindigkeit die entsprechende kinetische Energie des Türflügels ermittelt, um so an der Schließkante analog die kinetische Energie festzustellen. Dieses läßt im umgekehrten Falle die Möglichkeit zu, eine maximal zulässige Schließgeschwindigkeit aufgrund der ermittelten kinetischen Energie vorzugeben, die im Bereich der Zulässigkeit von solchen Türen liegt.

Die DE 42 06 272 A1 offenbart ein Betriebsstartverfahren und eine Betriebseinrichtung für eine gesteuerte und/oder geregelt betriebene Schiebetür. Bei diesem Verfahren werden die Parameter aufgrund der intelligenten Steuerung von der Tür selbst einmal zu Beginn der Einschaltung ermittelt und in einem nicht flüchtigen Speicher abgelegt.

Der DE-OS 39 21 158 ist eine Antriebsvorrichtung zum Öffnen und Schließen einer Gelenktür zu entnehmen. Es ist eine Regeleinrichtung vorhanden, welche die Begrenzung des Motorstromes aufgrund abgespeicherter Maximalsollwerte des Motorstromes vornimmt. Diese Maximalsollwerte entsprechen dabei den max. zulässigen Türschließkräften. Parameteränderungen durch Einflüsse jeglicher Art werden nicht berücksichtigt.

Eine Kraftbedarfsüberwachung eines Garagentores beim Öffnen und Schließen wird in der DE 42 14 998 A1 beschrieben. Die Kraftbedarfsüberwachung ist mit einer Sicherheitsüberwachung verbunden und schaltet beim Überschreiten eines Kraftbedarfshöchstwertes den Antrieb ab. Dabei sind in einem Speicher die torlaufspezifischen Kraftbedarfswerte in Abhängigkeit des Torlaufes für den Normallauf abgespeichert.

Die Aufgabe der Erfindung ist, mit einer starken Antriebseinheit, bestehend aus Motor, Steuerung und Netzteil, eine wesentlich höhere Kraft als gefordert an den bzw. die Türflügel zwischen den Haupt- und Nebenschließkanten abzugeben. Dabei soll ohne zusätzliche installation von weiteren sicherheitstechnischen Einrichtungen ein sicherer. Lauf einer automatisch verfahrbaren Tür gewährleistet sein.

Die Aufgabe wird dadurch gelöst. daß zu Beginn eines Bewegungsablaufes für das gesamte System des Antriebes, d.h. beim Auffahren und auch wieder beim Zufahren der Türflügel, eine Überprüfung der Momentenkennlinie des Antriebsmotors nach einem Ablaufprogramm erfolgt, wobei jeweils in der Startphase für einen kurzen Zeitraum eine Überschreitung des gespeicherten Sollwertes des Motorstromes zulässig ist. Das Ablaufprogramm sorgt dafür, daß ein Höchstmaß an Sicherheit für die benutzenden Personen gewährleistet wird.

Das zu einem solchen Antrieb gehörende Schaltnetzteil ist in der Regel in der Lage, eine größere Kraft als zulässig zwischen der Hauptschließkante und der Nebenschließkante zu erzeugen. Leistungsstarke Schaltnetzteile werden deshalb verwendet, damit der Bewegungsablauf der Türflügel in einem vertretbaren zeitlichen Rahmen abläuft, d.h. eine solche Tür muß sich schnell öffnen lassen.

Bei dem erfindungsgemäßen Gedanken wird davon ausgegangen, daß der Motorstrom ein Parameter für die Kraft des angeschlossenen Antriebsmotors ist. Die Ermittlung des Motorstromes und damit der Kennlinie des angeschlossenen Antriebsmotors ist ein Maß für das Drehmoment, welches dieser Motor erzeugen kann und damit eine spezifische Größe. Die Ermittlung des Motorstromes kann entweder durch einen Programmiervorgang geschehen, oder aber das System erfaßt diesen selbst über eine Messung oder durch Berechnung über den Innenwiderstand des Motors, da die vorhandene Betriebsspannung bekannt ist. Die bekannten bzw. ermittelten Werte werden in einem E²-Prom beispielsweise hinterlegt.

Innerhalb eines vorgebbaren Zeitraumes überprüft sich die Tür bei jedem Bewegungsvorgang automatisch selbst, und zwar in den Endlagen, d.h. die Türflügel befinden sich in der Schließ- bzw. in der Offenstellung. Es findet deshalb vor jeder Fahrt eine Überprüfung des gesamten Systemes statt, die durch die Momentenbegrenzung des Antriebsmotors gleichzeitig eine Kraftbegrenzung an den Schließkanten durchführt. Einen Ausgleich zwischen Inbetriebnahme und anschließendem Tagesbetrieb einer Tür führt ein Ablaufprogramm durch, z.B. dadurch. daß vor jedem Bewegungsbeginn eine Überprüfung der Momentenkennlinie stattfindet, denn auf diese Art und Weise ist ein Abdriften von den Normalparametern der Hardware sofort erkennbar. Für den Benutzer ist der Zeitraum einer solchen Überprüfung nicht feststellbar, da sich das Prüfverfahren in sehr kurzen Zeiträumen abspielt. Ein solches Prüfverfahren kann folgendermaßen vor sich gehen:
- Der Sollwert für den Motorstrom wird in der Startphase auf einen Wert, der über dem maximal zulässigen gespeicherten Wert liegt, vorgegeben.
- Es wird der Motor gestartet.
- Messung des Istwertes des Motorstromes.
- Überprüfung des maximalen Istwertes des Motorstromes für eine max. Zeitvorgabe t₁.
- Der Istwert wird auf einen Wert unter dem maximal zulässigen Sollwert geregelt.
- Ist der Istwert auf einem Wert unterhalb des maximal zulässigen Sollwertes?
- Ist die maximale Zeit t₂ abgelaufen?
- Testung positiv
- Testung negativ

Durch den ersten Sollwertsprung beim Anfahren wird der Antriebsmotor bestromt und der Motorstrom erreicht einen Grenzwert, der oberhalb des zulässigen maximalen Istwertes liegt. Dieser Grenzwert wird zu Beginn der Öffnungsphase erreicht. Danach wird der Sollwert wieder zurückgenommen, was eine Reduzierung des Motorstromes unterhalb des Grenzwertes der Momentenkennlinie zur Folge hat. Dieser gesamte Ablauf muß innerhalb einer vorgegebenen definierten Zeit erfolgen. Tritt ein Fehler auf, so wird dieser gemeldet, und die Tür wird sofort automatisch in einen gefahrlosen Zustand gebracht. Ein solcher Fehler kann z.B. eine plötzlich auftretende Leicht- oder Schwergängigkeit der Türflügel, oder das Auftreten eines Hindernisses sein. Jegliche Abweichungen, die außerhalb der vorgegebenen Zeiträume liegen, werden so sicher erkannt, weil im Normalbetrieb die Regelung den Antrieb unterhalb des Drehmomentenverlaufes und damit im sicheren Bereich hält.

Die Erfindung wird anhand eines möglichen schematisch dargestellten Ausführungsbeispieles in den Figuren näher erläutert. Es zeigt:
- Figur 1:: Ablaufschema eines Testdurchlaufes in der Startphase
- Figur 2:: Sollwertvorgabe mit Verlauf des Motorstromes

Aufgrund eines Ablaufsprogrammes, welches innerhalb der zu dem Mikroprozessor gehörenden Speicher abgelegt ist, wird sichergestellt, daß eine Überschreitung des Motorstromes über einen maximal vorgebbaren Wert und einer Zeitvorgabe nicht geschehen kann. Die Größe des Motorstromes ist ein Maß für die Kraft, die zwischen der Haupt- und der Nebenschließkante einer automatischen Tür auftreten kann. So kann beispielsweise ein Ablaufprogramm dergestalt vorliegen, daß in der Startphase aufgrund eines Steuerbefehles der Antriebsmotor bestromt wird. Wie bereits ausgesagt ist, ist in der Regel das angeschlossene Netzteil, welches für die Versorgung des Antriebsmotors zuständig ist, überdimensioniert, damit ein schnelles Anfahren der doch recht schweren Türflügel durchgeführt werden kann. So kann der Motor entsprechend dem max. Verlauf seiner Drehmomentenkennlinie beschleunigt werden, ohne daß die zulässige Kraft überschritten wird. Gleichzeitig wird aber der Motorstrom permanent gemessen und aufgrund des Ablaufprogrammes in dem Augenblick zurückgenommen, wo eine Überschreitung außerhalb des Drehmomenten-Kennlinienverlaufes vorliegt. Dadurch, daß der Sollwert herabgesetzt wird, wird auch gleichzeitig der Istwert des Motorstromes herabgesetzt und damit eine Reduzierung der auftretenden Kräfte durchgeführt. Würde der Motorstrom während der Fahrphase über den maximal zulässigen Wert ansteigen, so erfolgt eine Abschaltung des Antriebes über einen zweiten Abschaltweg. Durch diese Maßnahme ist sichergestellt, daß keine Gefahr für die benutzenden Verkehrskreise von den Türflügeln ausgehen kann.

Vielfach wird für unterschiedliche Türtypen ein und dieselbe Steuerungseinheit und damit auch Regelungseinheit verwendet, so daß der angeschlossene Motor aufgrund der anfallenden Türflügelgewichte bzw. der Gegebenheiten vor Ort unterschiedlich ist. Aus diesem Grunde müssen die Motorkennlinien in einem nicht flüchtigen Speicher, welches beispielsweise ein E²-Prom sein kann, abgelegt werden. Es ist jedoch auch möglich, daß das Türsystem aufgrund seiner Intelligenz die Motorkennlinien durch eine sogenannte Lemfahrt erfaßt und die ermittelten Werte ebenfalls in einen nicht flüchtigen Speicher ablegt, wo sie von dem angeschlossenen Mikroprozessor abgerufen und verarbeitet werden können. Neben der Erfassung der Motorkennlinien und damit des Motorstromes wird auch die Motorspannung erfaßt.

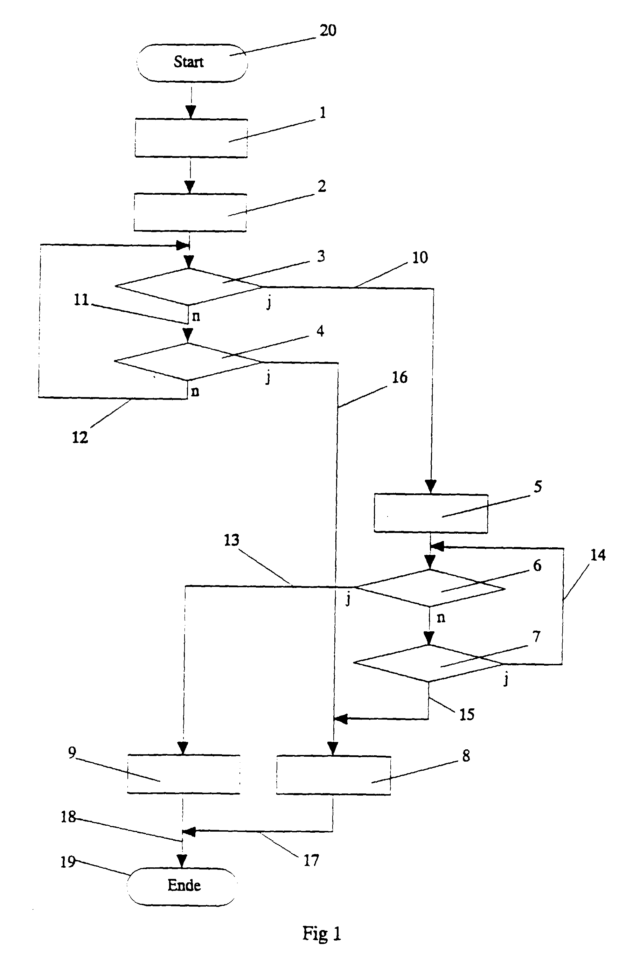

Der Inhalt der Erfindung ist ein Verfahren, was es zuläßt, aufgrund eines vorgebbaren wählbaren Zeitintervalles eine Testung des Antriebes auf Einhaltung der maximalen Kräfte an den Haupt- und Nebenschließkanten vor jeder Fahrt sicherzustellen. In der Figur 1 wird ein Ablaufschema dargestellt, bei dem ein Startbefehl 20 gegeben wird, der die Sollwertvorgabe 1 aktiviert. Die Sollwertvorgabe 1 gibt den maximal zulässigen Motorstrom vor, der oberhalb des zulässigen Stromes für den Fahrbetrieb liegt. Auch dieser maximal zulässige Motorstrom ist wiederum aufgrund der Erfassung über eine Lemfahrt bzw. durch Programmierung in einem nicht flüchtigen Speicher abgelegt worden. Anschließend wird der Antriebsmotor durch den Startbefehl 2 gestartet. Über die Erfassung des Motorstromes 3 wird der in der Anlaufphase steigende Motorstrom in seiner Größe erfaßt. Liegt sein Istwert unterhalb des maximal zulässigen Wertes, so wird über die Selektion 10 dieses an ein Unterprogramm zu dem Sollwertvergleich 5 weitergeleitet. Der Sollwert des Motorstromes wird in einem Istwertvergleich 6 weiterverarbeitet. Ist der Istwert größer als der zulässige Wert, so wird über die Meldung 'geringerer Istwert' 13 dieses an die Auswertung 'Test negativ' 9 weitergegeben. Dadurch, daß der Test negativ ausgefallen ist, geht ein Befehl 18 an das Ende des Testprogrammes 19. Aufgrund einer vorgebbaren Zeit kann dieser Test dann unmittelbar oder zu einem späteren Zeitpunkt je nach Kundenwunsch auch wiederholt werden. Ist jedoch der Strom des Motors auf einem kleineren Wert als der maximal zulässige Wert, so wird dieses aufgrund des Ablaufprogrammes an die Zeitbasis 7 t₂ weitergeleitet. Liegt der gesamte zeitliche Ablauf innerhalb der vorgegebenen Zeit t₂, so wird über die Testmitteilung 15 dieses an die Testauswertung 8 gemeldet. Die Testauswertung 8 sagt aus, daß der Test positiv verlaufen ist und somit der Antrieb entsprechend den Erfordernissen läuft. Dieses wird dann über den Befehl 17 an das Ende des Testes 19 mitgeteilt. Eine Wiederholung des Testes muß für diese Fahrbewegung nicht zu einem späteren Zeitpunkt erneut durchgeführt werden. Ist jedoch der Motorstrom auf einem höheren Wert als zulässig, so wird über die Zeitbasis 7 und die Rückführung 14 dieses erneut an den Istwert 6 des Motorstromes zurückgeführt. Gelingt es innerhalb des Zeitraumes t₂ der Zeitbasis 7, den Motorstrom entsprechend zu senken, so wird, wie bereits vor beschrieben, eine positive Testmeldung abgegeben. Ist der Antrieb nicht in der Lage, innerhalb des vorgebbaren Zeitraumes t₂ den Motorstrom entsprechend innerhalb der vorgegebenen Grenzen zu halten, so wird dieses dann über den Istwert 6 und die Meldung 13 als negatives Testergebnis 9 dem Programm mitgeteilt.

Ein weiterer Programmzweig ist in der Form vorhanden, daß von der Erfassung des Motorstromes 3 bei einem Strom niedriger als dem zulässigen Wert über die Selektion 11 dieses an die Zeitbasis 4 t₁ gemeldet wird. Ist die Zeit noch nicht verstrichen, so wird über die Testmitteilung 16 dieses an die Testauswertung 8 zum positiven Ausgang des Testes gemeldet. Verläuft jedoch der Test negativ innerhalb der Zeitbasis 4, so wird dieses über die Rückführung 12 an die Erfassung des Motorstromes 3 zurückgeführt, und hier kann dann innerhalb der vorgebbaren Zeit entweder ein positiver oder ein negativer Test über das Programm entschieden werden.

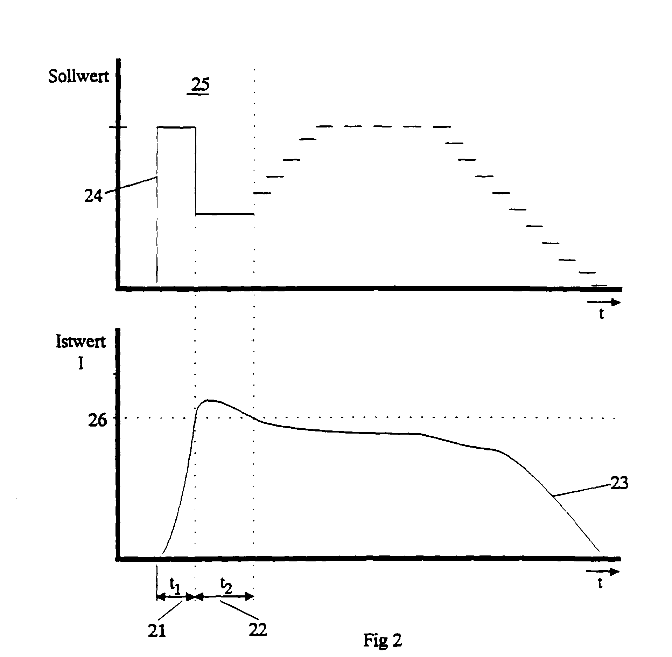

In der Figur 2 ist in dem unteren Kurvenverlauf der Verlauf des Motorstrom-lstwertes 23 über die Zeit, und in dem darüber befindlichen Kurvenverlauf die Sollwertvorgabe 24 des Motorstromes dargestellt. Der Motorstrom wird aufgrund einer Pulsweitenmodulation gesteuert. Innerhalb der Testphase 25, wie sie in dem Ablaufschema der Figur 1 dargestellt worden ist, wird der Antrieb auf seine mögliche, und damit zu erzielende maximale Kraft zwischen der Haupt- und Nebenschließkante getestet. In dem Verlauf des Motorstrom-Istwertes 23 wird deutlich, daß in den Zeiträumen t₁ 21 und t₂ 22 der gesamte Test ablaufen muß. Ebenfalls zeigt diese Kurve, daß der maximale Motorstrom für den Zeitraum 22 oberhalb des maximalen zulässigen Motorstromes 26 liegt. Die von den Türflügeln während dieser Zeit zurückgelegte Wegstrecke ist vernachlässigbar klein.

Durch die vorgenannten Programmabläufe wird klar, daß hiermit ein Verfahren geschaffen worden ist, das es zuläßt, auf einfache und kostengünstige Art und Weise eine Regelung des Motorstromes innerhalb von vorgebbaren Bereichen zu realisieren und gleichzeitig das Höchstmaß an Sicherheit bietet.

### Bezugszeichen

- 1.: Sollwertvorgabe
- 2.: Antriebsmotorstart
- 3.: Erfassung des Motorstromes
- 4.: Zeitbasis t₁
- 5.: Sollwertvergleich
- 6.: Istwert des Motorstromes
- 7.: Zeitbasis t₂
- 8.: Testauswertung
- 9.: Test negativ
- 10.: Selektion
- 11.: Selektion
- 12.: Rückführung
- 13.: Meldung 'geringerer Istwert'
- 14.: Rückführung
- 15.: Testmitteilung
- 16.: Testmitteilung
- 17.: Befehl
- 18.: Befehl
- 19: Testende
- 20.: Startbefehl
- 21.: Zeit t₁
- 22.: Zeit t₂
- 23.: Verlauf des Motorstrom-Istwertes
- 24.: Sollwertvorgabe
- 25.: Testphase
- 26.: maximal zulässiger Motorstrom

## Patentansprüche

1. Verfahren zur Regelung einer durch einen Antriebsmotor angetriebenen automatischen Tür, deren Bewegungsablauf durch ein Dauersignal und/oder mindestens ein Sensorsignal aktiviert wird, entsprechend dem Verfahren beinhaltet eine programmierbare, elektronische Steuerungseinheit einen Mikroprozessor und einen Speicher, in dem die Kennlinien des verwendeten Antriebsmotors abgespeichert sind und erfaßt ein Ablaufprogramm die an den aufeinander zubewegenden Schließkanten der Tür auftretenden Kräfte ; das Verfahren ist dadurch geknnzeichnet, daß das Antriebssystem mit der abgespeicherten Motormomentenkennlinie zu Beginn jeder Fahrt des oder der Türflügel überprüft wird, wobei die Überprüfung durch ein Ablaufprogramm nach folgenden Kriterien und Schritten durchgeführt wird:
a) In der Startphase (20) des Antriebsmotors wird ein Sollwert (1) für den Motorstrom vorgegeben, der den maximal zulässigen Wert der abgespeicherten Kennlinie übersteigt.
b) Starten (2) des Antriebsmotors
c) Messung des Istwertes (6) des Motorstromes
d) Überprüfung des maximalen Istwertes des Motorstromes für eine maximale Zeitvorgabe t₁ (21).
e) Bei Überschreitung des maximal zulässigen Motorstrom-Sollwertes erfolgt eine Reduzierung des Sollwertes (1) nach einem vorgebbaren Zeitintervall auf einen Betrag, welcher unterhalb der gespeicherten Kennlinie liegt.
f) Wird der maximal zulässige Wert (26) des Motorstromes überschritten und erreicht dieser nach Reduzierung der Testvorgabe nicht innerhalb der maximalen Zeitvorgabe t₂ (22) den maximal zulässigen Wert (26) des Motorstromes, so wird der Antrieb automatisch außer Betrieb gesetzt.

2. Verfahren nach Anspruch 1, dadurch gekennzeichnet, daß bei einer Überschreitung der maximal zulässigen Sollwerte der Motormomentenkennlinie außerhalb der Zeitvorgaben t₁ (21) und t₂ (22) eine sofortige Abschaltung des Antriebsmotors erfolgt.

3. Verfahren nach Anspruch 1, dadurch gekennzeichnet, daß zur Ermittlung der Motorkennlinien in einer Lernfahrt der Motorstrom, die Motorspannung und die zugehörige Motordrehzahl erfaßt und in der Steuerungseinheit abgespeichert werden.

4. Verfahren nach Anspruch 1, dadurch gekennzeichnet, daß die Motorkennlinien programmiert werden.

5. Verfahren nach den Ansprüchen 3 und 4, dadurch gekennzeichnet, daß die Motorkennlinien in einem E²-Prom gespeichert werden.

6. Verfahren nach den Ansprüchen 1 und 2, dadurch gekennzeichnet, daß der Antriebsmotor durch eine Pulsweitenmodulation geregelt wird.

## Claims

1. A method of controlling an automatic driven-door, the sequence of movements of which is activated by a permanent signal and/or at least one sensor signal, corresponding to the method a programmable electronic control unit contains a microprocessor and a memory in which the characteristics of the motor are stored, and a sequence program detectes the forces occuring at the closing edges of the door moving towards another, the method is
**characterised in that**
the drive system and the stored motor torque characteristic is checked at the beginning of each journey of the door leaf or leaves, whereat the check is made by a sequence program in accordance with the following criteria and in the following steps:
a) during the starting phase (20) of the motor, a set value (1) is preset for the motor current corresponding to the maximum permissible value of the stored characteristic,
b) the motor is started (2),
c) the actual motor current is measured,
d) the maximum actual motor current for a maximum set time t₁ (21) is checked,
e) if the maximum permissible set motor current is exceeded, the set value (1) is reduced, after a presettable time, to an amount below the stored characteristic,
f) if the maximum permissible value (26) of the motor current is exceeded and if, after reduction of the test set value, it does not reach the maximum permissible value (26) of the motor current within the maximum set time t₂ (22), the drive is automatically put out of operation.

2. A method according to claim 1, characterised in that if the maximum permissible set valuesof the motor torque characteristic are exceeded outside the set time t₁ (21) and t₂ (22), the motor is immediately switched off.

3. A method according to claim 1, characterised in that in order to determine the motor characteristics in a learning journey, the motor current, the motor voltage and the associated motor speed are detected and stored in the control unit.

4. A method according to claim 1, characterised in that the motor characteristics are programmed.

5. A method accoding to claims 3 and 4, characterised in that the motor characteristics are stored in an E²-PROM.

6. A method according to claims 1 and 2, characterised in that the drive motor is controlled by pulse width modulation.

## Revendications

1. Procédé de régulation d'une porte automatique entraînée par un moteur et dont le movement est activé par un signal permanent et/ou au moins un signal de capteur, correspondant le procédé une unité de commande électronique programmable comprenant un microprocesseur et une mèmoire contenant les courbes caractéristiques du motuer utilisé, et un programme de déroulement détecte les efforts produits au niveau des arêtes de fermeture de la porte, qui se déplacent l'une contre l'autre,
**le procédé est caractérisé en ce que** le système d'entraînement est contrôle avec la caractéristique de couple du moteur, mise en mémoire, au début de chaque déplacement du ou des battons de porte, qoui le contrôle est effectué par un programme de déroulement selon les critères et les étapes suivantes:
a) dans la phase de démarrage (20) du moteur, on prévoit une valeur de consigne (1) de l'intensité du moteur qui dépasse lavaleur maximale autorisée de la courbe caractéristique mise en mémoire:
b) démarrage (2) du moteur:
c) mesure de la valeur d'intensité réelle (6) dans le moteur;
d) contrôle de la valeur réelle maximale de l'intensité du moteur pour und durée maximale prédéterminée t₁ (21);
e) lors de dépassement de la valuer maximale autorisée de l'intensité de moteur, la valeur de consigne (1) est réduite, après un intervalle de temps prédéterminé, jusqu'à une valeur située en dessous de la courbe caractéristique mise en mémoire;
f) si la valeur maximale autorisée (26) de l'intensité du moteur est dépassée et si, après réduction de la consigne de test, à l'intérieur du temps prédéterminé maximum t₂ (22), l'intensité du moteur n'atteint pas la valeur maximale autorisée (26), le moteur est automatiquement mis hors service.

2. Procédé selon la revendication 1, caracterisé en ce que en cas de dépassement des valeurs de consigne maximales autorisée de la courbe caractéristique du couple du moteur en dehors des temps prédéterminés t₁ (21) et t₂ (22), il y a coupure automatique du moteur.

3. Procédé selon la revendication 1, caractérisé en ce que pour déterminer les courbes caractéristiques du moteur on détecte au cours d'un fonctionnement d'apprentissage, le courant du moteur, la tension du moteur et la vitesse de rotation correspondance du moteur, et on enregistre dans l'unité de commande.

4. Procédé selon la revendication 1, caractérisé en ce que les courbes caractéristiques du moteur sont programmées.

5. Procédé selon les revendications 3 et 4, caractérisé en ce que les courbes caractéristiques du moteur sont enregistrées dans une mémoire E²-Prom.

6. Procédé selon les revendications 1 et 2, caractérisé en ce que le moteur est régulé par une modulation à largeur d'impulsions.
